# FASCICULE DE BREVET EUROPEEN

(11) **EP 2 307 258 B1**
(45) Date de publication et mention de la délivrance du brevet: **28.03.2018**
(21) Numéro de dépôt: 09772663.2
(22) Date de dépôt: 30.06.2009
(51) Int. Cl.: B62D 1/184

(54) **DISPOSITIF D'ASSISTANCE AU VERROUILLAGE D'UNE COLONNE DE DIRECTION**
DIE VERRIEGELUNG EINER LENKSÄULE UNTERSTÜTZENDE VORRICHTUNG
DEVICE ASSISTING WITH THE LOCKING OF A STEERING COLUMN

(30) Priorité: 30.06.2008 FR 0854406
(43) Date de publication de la demande: 13.04.2011
(73) Titulaire: Robert Bosch Automotive Steering Vendôme, 41100 Vendome (FR)
(72) Inventeur: BAHR, Christophe, F-41100 Vendome (FR); BOTTE, Florian, F-91600 Savigny sur Orge (FR)
(74) Mandataire: Novagraaf Technologies
(86) Numéro de dépôt international: PCT/FR2009/000806
(87) Numéro de publication internationale: WO 2010/000980

(56) Documents cités:
- EP-A- 1 995 149
- FR-A- 2 822 782
- US-A- 3 977 692
- US-A1- 2005 127 656

## Description

La présente invention concerne un dispositif pour le verrouillage et le déverrouillage assistés d'une colonne de direction réglable.

La présente invention se rapporte plus particulièrement aux moyens d'assistance au verrouillage et au déverrouillage de la colonne de direction en vue de son réglage par le conducteur.

Il existe déjà, dans l'art antérieur, des dispositifs de verrouillage comprenant un élément de came fixe, solidaire d'un corps de colonne, un élément de came mobile prolongé par un levier de manoeuvre et des moyens d'articulation couplés à un arbre central monté entre lesdits éléments de came.

Toutefois, ces dispositifs n'offrent pas une sensibilité suffisante à l'utilisateur ni une ergonomie optimale.

En effet, dans la position de déverrouillage, il existe un jeu entre les éléments de came mobile et fixe ce qui donne une sensation défectueuse.

Au surplus, le déverrouillage s'effectue avec un effort constant et trop faible sans que l'opérateur ne sente de résistance ce qui rend le réglage peu pratique.

En outre, le déverrouillage peut intervenir accidentellement du fait de chocs ou de vibrations excessives.

Le document FR2822782 divulgue un dispositif de verrouillage, comprenant en plus un ressort coopérant avec une came fixe, solidaire du corps de colonne, et avec une came mobile, actionnée par un levier de manoeuvre, de manière à passer par une position d'équilibre lors du passage de la position de verrouillage à la position de déverrouillage et lors du passage de la position de déverrouillage à la position de verrouillage.

Le document US 2005/127656 A1 divulgue un dispositif de verrouillage selon le préambule de la revendication 1 comprenant une came fixe et avec une came mobile, actionnée par un levier de manoeuvre de manière à verrouiller la colonne. Un ensemble d'un ou deux ressorts relie le levier de manoeuvre à un point fixe correspondant. Le ou les ressorts comprennent une extrémité montée libre en rotation sur le levier de manoeuvre et l'autre reliée au point fixe correspondant. L'ensemble de ressort(s) est agencé de manière à ce que la force de rappel totale générée par l'ensemble de ressort(s) décroisse constamment depuis une valeur maximum en position de verrouillage jusqu'à une valeur nulle en position de déverrouillage.

La présente invention entend remédier à ces inconvénients de manière fiable et efficace.

Ce but est atteint, selon l'invention, au moyen d'un dispositif selon la revendication 1. Selon une caractéristique avantageuse, lesdits jeux de bossages forment des entretoises d'écartement variable en fonction de la position angulaire de l'élément de came mobile relativement à l'élément de came fixe.

En outre, il est prévu que lesdits éléments de came portent des butées de fin de course.

Selon une variante avantageuse, ledit organe de rappel est constitué d'un ressort hélicoïdal se prolongeant, à chacune de ses spires d'extrémité, par une patte de liaison montée en libre rotation sur lesdits éléments de came.

Selon une caractéristique spécifique, lesdites pattes s'étendent sensiblement selon la même direction parallèle à l'axe central.

De préférence, ledit axe central est solidaire de l'élément de came mobile et son extrémité est pourvue d'un filetage pour la fixation au corps de la colonne.

Selon une autre variante, les spires d'extrémité dudit ressort se raccordent aux pattes de liaison via des branches de support s'étendant de façon sensiblement perpendiculaire à l'axe central.

Dans cette variante, la branche de support raccordée audit élément de came mobile présente un coude concave.

En outre, lesdites pattes de liaison sont engagées dans des orifices formant paliers, ménagés au travers des éléments de came.

Selon encore une autre variante, ledit ressort est monté autour d'une tige cylindrique formant armature.

Le dispositif de l'invention a pour vocation d'apporter au conducteur une information franche sur l'état du système de réglage de la colonne.

Le dispositif de l'invention offre une assistance efficace au verrouillage/déverrouillage de la colonne en vue de son réglage ainsi qu'une meilleure sécurité de l'appareil de direction dans sa globalité.

Les efforts que doit appliquer l'opérateur sur le levier de verrouillage sont ainsi moindres et cette opération devient donc beaucoup plus facile.

La position d'équilibre intermédiaire permet de réduire l'effort qui doit être appliqué au levier par l'opérateur pour atteindre la position de verrouillage.

En outre, le dispositif de l'invention permet d'éviter les mauvaises manipulations et de réduire considérablement les risques de panne ou d'accident liés au réglage et à la maintenance.

L'invention sera mieux comprise à l'aide de la description, faite ci-après à titre purement explicatif, d'un mode de réalisation de l'invention, en référence aux figures annexées sur lesquelles :
- la figure 1 représente une vue latérale d'un mode de réalisation du dispositif de l'invention ;
- la figure 2 représente une vue en perspective du mode de réalisation de la figure 1 ;
- la figure 3 représente une vue en éclatée des éléments constitutifs du dispositif de l'invention selon les figures 1 et 2 ;
- les figures 4A, 4B, 5A, 5B et 6A, 6B représentent respectivement des vues latérales et de dessus du dispositif de la figure 1 respectivement dans les trois positions déverrouillée, intermédiaire et verrouillée ;
- la figure 7 représente une vue latérale d'un autre mode de réalisation du dispositif de l'invention ; et
- la figure 8 est un graphique qui illustre les efforts à exercer sur le levier avec et sans l'aide du dispositif d'assistance de l'invention.

Le dispositif de l'invention est destiné à équiper un corps 5 de colonne de direction de véhicule automobile. Ce corps 5 est représenté au moins partiellement sur les figures.

La colonne de direction (non représentée) est réglable en translation longitudinale et en élévation pour être adaptée à des conducteurs de différentes morphologies.

Toutefois, le réglage de la colonne ne peut être effectué, qu'une fois cette dernière libérée des organes de fixation et de sécurité qui la maintiennent fermement dans sa position de fonctionnement sur le corps. Le système de réglage de la colonne n'est pas ici représenté.

Après chaque réglage, il est nécessaire de bloquer, à nouveau, la colonne et son système de réglage dans la position choisie et d'apporter au conducteur la garantie que la colonne est bien verrouillée.

De même, lors du déverrouillage à fins de réglage, il est judicieux d'apporter à l'opérateur une assistance et une information sur l'état du système.

Dans cette perspective et comme représenté sur les figures, le dispositif d'assistance comprend généralement un élément de came mobile 1, un élément de came fixe 2 solidaire du corps 5 et des moyens d'articulation couplés à un axe central 3 monté entre lesdits éléments de came 1, 2 et traversant ledit corps.

Les éléments de came mobile 1 et fixe 2 comportent chacun une partie de profil cylindrique en contact avec l'axe 3. La partie cylindrique de l'élément de came mobile se prolonge radialement par un manche portant un levier de manoeuvre 11.

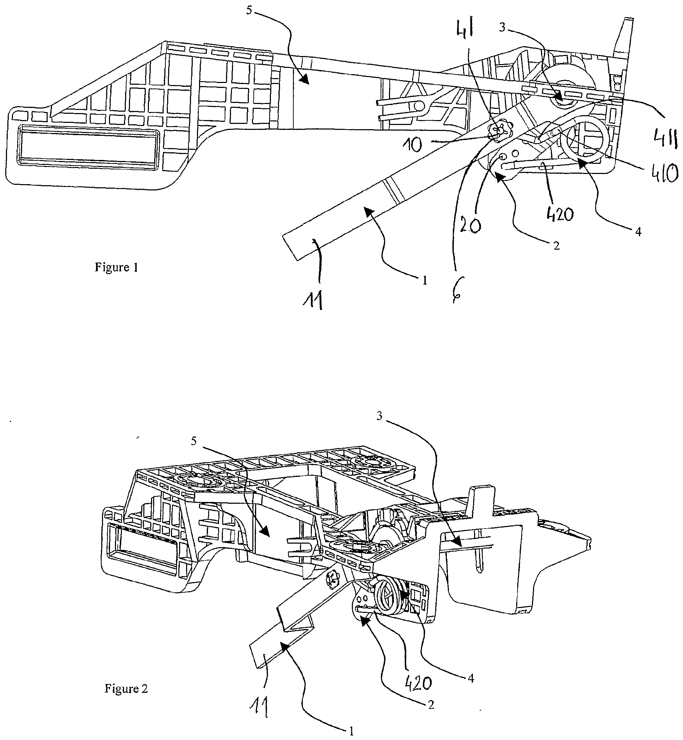

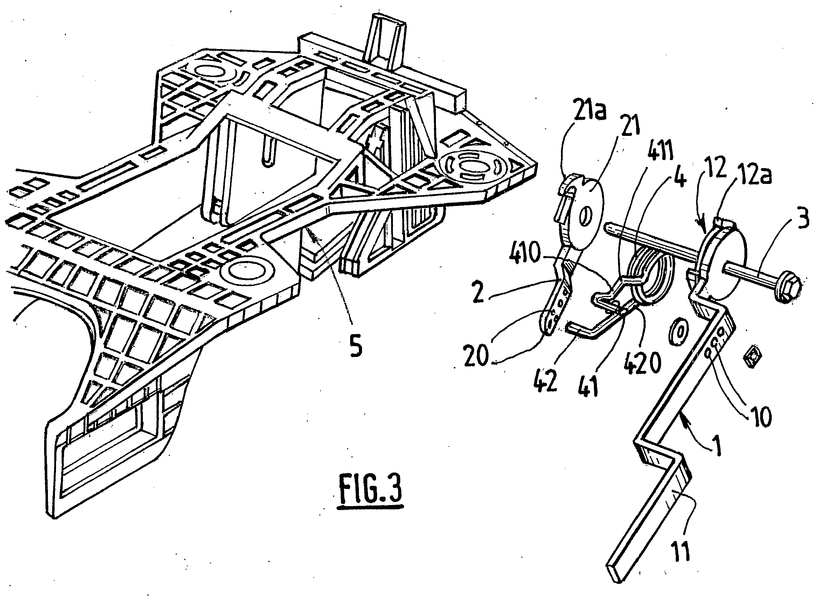

Comme représenté, notamment sur les figures 2 et 3, le manche et le levier 11 sont, de préférence, conformés de façon à s'écarter du corps 5 de colonne pour permettre à l'opérateur une plus grande liberté de manoeuvre.

Dans le dispositif d'assistance de l'invention, les moyens d'articulation comprennent un organe de rappel élastique 4 destiné à coopérer avec deux jeux de bossages complémentaires 12, 21 portés respectivement par chacune des parties cylindriques des deux éléments de came 1, 2 en regard.

Les jeux de bossage sont réalisés soit directement sur les éléments de came, soit sur des rondelles rapportées et fixées sur les faces internes des éléments de came comme c'est le cas sur l'élément de came mobile 1 du mode de réalisation représenté sur la figure 3.

Les jeux de bossage délimitent, l'un avec l'autre, deux butées de fin de course 12a, 21a de façon à permettre, par pivotement du levier 11, le déplacement de l'élément de came mobile 1 entre une position de verrouillage et une position de déverrouillage en passant par une position intermédiaire d'équilibre instable.

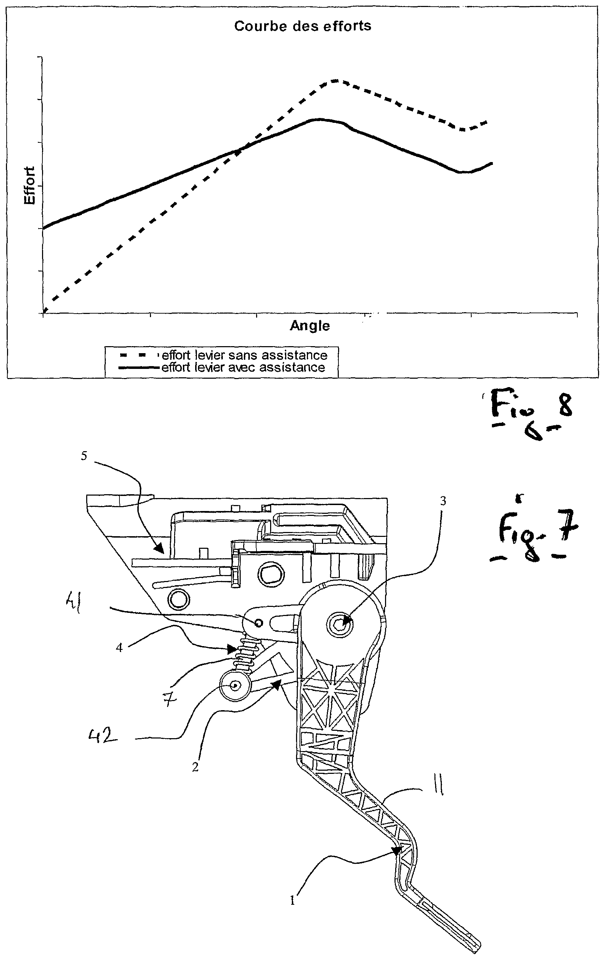

Comme illustré par la figure 8, le franchissement de cette position intermédiaire nécessite un effort croissant pour l'opérateur et tout effort insuffisant conduit au rappel automatique de l'élément de came mobile 1 et du levier 11 vers la position stable de verrouillage.

Une fois le seuil de tension franchi, l'élément de came mobile 1 rejoint la position de déverrouillage stable sans effort excessif, aidé par l'action de l'organe de rappel.

Les jeux de bossages 12,21 forment des entretoises d'écartement variable en fonction de la position angulaire de l'élément de came mobile 1 relativement à l'élément de came fixe 2.

La mise en contact des bossages 12 de l'élément de came mobile 1 avec les bossages 21 de l'élément de came fixe 21 est effectuée par pivotement du levier 11. Ce contact forcé entraîne le déplacement transversal de l'axe 3 porté par l'élément de came mobile 1 et la libération de la colonne.

L'organe de rappel élastique 4 est constitué ici d'un ressort hélicoïdal se prolongeant, à chacune de ses spires d'extrémité, par une patte de liaison 41,42 montée en libre rotation sur lesdits éléments de came 1, 2.

Les pattes 41,42 s'étendent sensiblement selon la même direction et parallèlement à l'axe central 3.

D'autres types de ressort pourraient être utilisés tels que des ressorts à lame, à spirale, conique ou tout autre moyen permettant d'assurer un rappel élastique.

Dans les modes de réalisation représentés ici, l'axe central 3 est rendu solidaire de l'élément de came mobile 1, par exemple, par sertissage, et son extrémité est pourvue d'un filetage pour la fixation au corps 5 de façon à assurer, après vissage, l'immobilisation de la colonne.

Dans le mode de réalisation de figures 1 à 6, le ressort 4 est un ressort de torsion dont l'axe est parallèle à l'axe central correspondant à l'axe 3 de rotation de l'élément de came mobile 1.

Les spires d'extrémité du ressort 4 se raccordent aux pattes de liaison 41,42 via des branches de support 410, 420 s'étendant de façon sensiblement perpendiculaire à l'axe central 3.

La branche de support 410 raccordée à l'élément de came mobile 1 présente un coude concave 411. La concavité de ce coude est orientée sensiblement vers l'autre branche 420.

Les pattes de liaison 41,42 sont engagées dans des orifices 10, 20 formant des paliers qui sont ménagés au travers des éléments de came 1, 2.

De préférence, au moins la patte 41 est pourvue de fines nervures longitudinales coopérant avec une rondelle fendue 6 qui est rapportée pour la bloquer dans l'un des orifices 10 en fonction de la tension choisie pour le ressort 4.

Dans le mode de réalisation de la figure 7, le ressort 4 est hélicoïdal et disposé selon un axe perpendiculaire à l'axe 3 de rotation de l'élément de came mobile 1.

Ce ressort est ici dépourvu de branches de support et est directement monté par ses pattes de liaison 41,42 sur les éléments de came 1, 2 en entourant une tige cylindrique 7 formant armature.

Il serait également possible de prévoir que le ressort est enroulé sur l'axe de rotation 3 ou bien encore sur les éléments de came.

Le principe de fonctionnement du dispositif de l'invention pour l'assistance au verrouillage/déverrouillage des éléments de cames est illustré par le graphique de la figure 8. Ce principe est le suivant.

En position de déverrouillage, les bossages respectifs 12,21 des éléments de came 1,2 sont en décalage angulaire. La tension dans le dispositif est nulle et le levier 11 est au repos avec un certain jeu résultant de l'absence de contrainte.

Lorsque l'opérateur actionne le levier 11, l'élément de came mobile 1 pivote et le décalage angulaire des bossages complémentaires 12,21 se réduit progressivement jusqu'à ce qu'ils viennent en contact les uns avec les autres.

Ce mouvement de rotation relatif provoque un appui forcé des bossages de la came mobile 1 contre ceux de la came fixe 2 et entraîne un écartement des deux cames qui se traduit par une mise sous tension du corps 5 et un verrouillage de la colonne de direction.

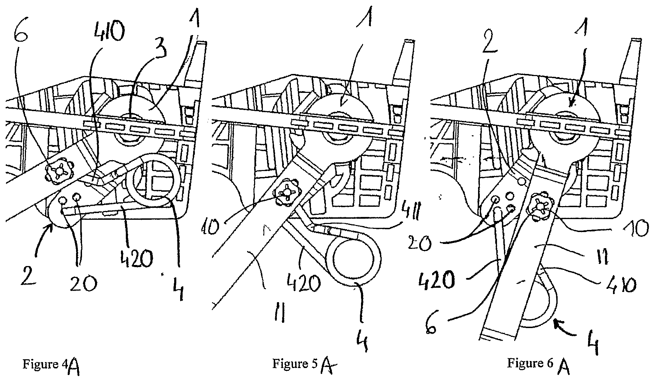

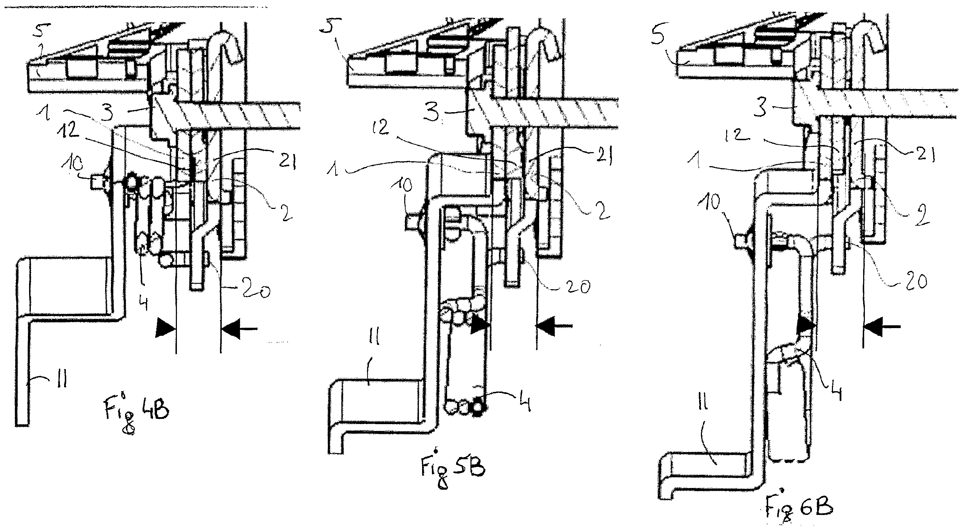

Au cours de cette opération qui est représentée sur les figures 4A et 4B à 6A et 6B (dans le sens correspondant respectivement au passage de la position de déverrouillage à la position de verrouillage), le ressort 4 opère un mouvement de rotation autour de l'axe passant par son point d'ancrage 20 sur l'élément de came fixe 2 tandis que son autre point d'ancrage 10 sur l'élément de came mobile 1 effectue un mouvement pendulaire, centré sur le point d'ancrage 20.

La distance entre les deux points d'ancrage 10,20 du ressort 4 et donc la tension de ce ressort, varie en fonction de la position angulaire de l'élément de came mobile 1. La variation de tension est ressentie par l'opérateur par une augmentation ou une diminution de l'effort au niveau du levier 11 suivant la position du système.

Les trois positions du dispositif peuvent donc être définies de la manière suivante :
- position de déverrouillage (figures 4A, 4B) : le ressort 4 est en compression et transmet un effort à la came mobile 1 pour la maintenir dans cette position. L'assistance est alors négative car la tension du ressort est supérieure à l'effort initial de l'opérateur. L'écartement entre les cames est au minimum ;
- position intermédiaire (figures 5A, 5B) : l'effort que doit fournir l'opérateur doit d'abord être augmenté pour vaincre la force de rappel du ressort et franchir le seuil de contraintes qui correspond à l'équilibre instable de l'élément de came mobile 1 et donc du levier 11. Dans cette première étape, l'assistance est encore négative. Puis, au passage de l'équilibre, le sens des forces s'inverse, comme représenté sur la figure 8 et les efforts de l'opérateur deviennent assistés par les forces produites par le dispositif via le ressort 4. L'assistance devient positive et entraîne l'élément de came mobile 1 vers une position de repos stable ;
- position de verrouillage (figures 6A, 6B) : le ressort est toujours en compression et transmet un effort faible à l'élément de came mobile 1 mais suffisant pour le maintenir dans cette position stable. L'écartement des cames est maximum et il n'y a pas de jeu axial. L'assistance est encore positive et l'opérateur n'aura à exercer qu'un léger effort pour ramener le levier 11 vers la position intermédiaire.

L'invention est décrite dans ce qui précède à titre d'exemple. Il est entendu que l'homme du métier est à même de réaliser différentes variantes de l'invention sans pour autant sortir du cadre du brevet.

## Revendications

1. Dispositif pour le verrouillage et le déverrouillage assistés d'une colonne de direction réglable comprenant un élément de came fixe (2), solidaire d'un corps (5) de colonne, un élément de came mobile (1) prolongé par un levier de manoeuvre (11), un axe central (3) monté entre lesdits éléments (1,2) et traversant ledit corps, et des moyens d'articulation couplés audit axe central, lesdits moyens d'articulation comprenant un organe de rappel élastique (4) destiné à coopérer avec deux jeux de bossages complémentaires (12,21) portés respectivement par chaque élément de came (1,2) et destinés à venir en contact l'un avec l'autre de façon à permettre, par pivotement du levier (11), le déplacement de l'élément de came mobile (1) entre une position de verrouillage et une position de déverrouillage, ledit organe de rappel étant constitué d'un ressort hélicoïdal,
**caractérisé en ce que** ce dit déplacement de l'élément de came mobile (1) entre ladite position de verrouillage et ladite position de déverrouillage se fait en passant par une position intermédiaire d'équilibre instable, et **en ce que** ledit ressort hélicoïdal se prolonge, à chacune de ses spires d'extrémité, par une patte de liaison (41,42) montée en libre rotation sur lesdits éléments de came (1,2).

2. Dispositif selon la revendication 1, **caractérisé en ce que** lesdits jeux de bossages (12,21) forment des entretoises d'écartement variable en fonction de la position angulaire de l'élément de came mobile (1) relativement à l'élément de came fixe (2).

3. Dispositif selon la revendication 1 ou 2, **caractérisé en ce que** lesdits éléments de came (1,2) portent des butées de fin de course (12a, 21a).

4. Dispositif selon l'une quelconque des revendications 1 à 3, **caractérisé en ce que** lesdites pattes (41,42) s'étendent sensiblement selon la même direction parallèle à l'axe central (3).

5. Dispositif selon l'une quelconque des revendications 1 à 4, **caractérisé en ce que** ledit axe central (3) est solidaire de l'élément de came mobile (1) et son extrémité est pourvue d'un filetage pour la fixation au corps (5) de la colonne.

6. Dispositif selon l'une quelconque des revendications 1 à 5, **caractérisé en ce que** les spires d'extrémité dudit ressort (4) se raccordent aux pattes de liaison (41,42) via des branches de support (410,420) s'étendant de façon sensiblement perpendiculaire à l'axe central (3).

7. Dispositif selon la revendication 6, **caractérisé en ce que** la branche de support (410) raccordée audit élément de came mobile (1) présente un coude concave (411).

8. Dispositif selon l'une des revendications 1 à 7, **caractérisé en ce que** lesdites pattes de liaison (41,42) sont engagées dans des orifices (10,20) formant paliers, ménagés au travers des éléments de came (1,2).

9. Dispositif selon l'une des revendications 1 à 5, **caractérisé en ce que** ledit ressort (4) est monté autour d'une tige cylindrique (7) formant armature.

## Patentansprüche

1. Vorrichtung zur unterstützten Verriegelung und Entriegelung einer verstellbaren Lenksäule, umfassend ein feststehendes Nockenelement (2), das mit einem Säulenkörper (5) fest verbunden ist, ein bewegliches Nockenelement (1), das von einem Betätigungshebel (11) verlängert wird, eine zentrale Achse (3), die zwischen den Elementen (1, 2) angebracht ist und den Körper durchsetzt, und Gelenkmittel, die an die zentrale Achse gekoppelt sind, wobei die Gelenkmittel ein elastisches Rückstellglied (4) umfassen, das dazu bestimmt ist, mit zwei komplementären Vorsprungsätzen (12, 21) zusammenzuwirken, die jeweils von jedem Nockenelement (1, 2) getragen werden und dazu bestimmt sind, miteinander in Kontakt zu treten, um durch Schwenken des Hebels (11) die Bewegung des beweglichen Nockenelements (1) zwischen einer Verriegelungsposition und einer Entriegelungsposition zu ermöglichen, wobei das Rückstellglied von einer Schraubenfeder gebildet wird,
**dadurch gekennzeichnet, dass** die Bewegung des beweglichen Nockenelements (1) zwischen der Verriegelungsposition und der Entriegelungsposition über eine Zwischenposition instabilen Gleichgewichts erfolgt, und dadurch, dass die Schraubenfeder an jeder ihrer Endwindungen von einer Verbindungslasche (41, 42) verlängert wird, die frei drehend auf den Nockenelementen (1, 2) angebracht ist.

2. Vorrichtung nach Anspruch 1, **dadurch gekennzeichnet, dass** die Vorsprungsätze (12, 21) Distanzstücke mit variablem Abstand je nach Winkelposition des beweglichen Nockenelements (1) in Bezug auf das feststehende Nockenelement (2) bilden.

3. Vorrichtung nach Anspruch 1 oder 2, **dadurch gekennzeichnet, dass** die Nockenelemente (1, 2) Endanschläge (12a, 21a) tragen.

4. Vorrichtung nach einem der Ansprüche 1 bis 3, **dadurch gekennzeichnet, dass** sich die Laschen (41, 42) im Wesentlichen gemäß der gleichen Richtung parallel zu der zentralen Achse (3) erstrecken.

5. Vorrichtung nach einem der Ansprüche 1 bis 4, **dadurch gekennzeichnet, dass** die zentrale Achse (3) mit dem beweglichen Nockenelement (1) fest verbunden ist und ihr Ende mit einem Gewinde für die Fixierung am Säulenkörper (5) ausgestattet ist.

6. Vorrichtung nach einem der Ansprüche 1 bis 5, **dadurch gekennzeichnet, dass** die Endwindungen der Feder (4) mit den Verbindungslaschen (41, 42) über Stützschenkel (410, 420) verbunden sind, die sich im Wesentlichen senkrecht zu der zentralen Achse (3) erstrecken.

7. Vorrichtung nach Anspruch 6, **dadurch gekennzeichnet, dass** der Stützschenkel (410), der mit dem beweglichen Nockenelement (1) verbunden ist, einen konkaven Knick (411) aufweist.

8. Vorrichtung nach einem der Ansprüche 1 bis 7, **dadurch gekennzeichnet, dass** die Verbindungslaschen (41, 42) in Öffnungen (10, 20) eingreifen, die Lager bilden, die durch die Nockenelemente (1, 2) eingerichtet sind.

9. Vorrichtung nach einem der Ansprüche 1 bis 5, **dadurch gekennzeichnet, dass** die Feder (4) rund um eine zylindrische Stange (7) angebracht ist, die ein Gestell bildet.

## Claims

1. Device for the assisted locking and unlocking of an adjustable steering column comprising a fixed cam element (2), secured to a column body (5), a moving cam element (1) extended by an operating lever (11), a central spindle (3) mounted between said elements (1, 2) and passing through said body, and articulation means coupled to said central spindle, said articulation means comprising an elastic return member (4) intended to cooperate with two sets of complementary bosses (12, 21) carried respectively by each cam element (1, 2) and intended to come into contact with one another in such a way as to allow by pivoting of the lever (11), the movement of the moving cam element (1) between a locked position and an unlocked position, said return member being constituted of a helical spring,
**characterised in that** this said movement of the moving cam element (1) between said locked position and said unlocked position is done by passing through an intermediate position of unstable equilibrium, and **in that** said helical spring is extended, at each one of the end windings thereof, by a connecting tab (41, 42) mounted to rotate freely on said cam elements (1, 2).

2. Device according to claim 1, **characterised in that** said sets of bosses (12, 21) form spacers for variable separation according to the angular position of the moving cam element (1) relatively to the fixed cam element (2).

3. Device according to claim 1 or 2, **characterised in that** said cam elements (1, 2) carry end-of-travel stops (12a, 21a).

4. Device according to one of claims 1 to 3, **characterised in that** said tabs (41, 42) extend substantially in the same direction parallel to the central spindle (3).

5. Device according to one of claims 1 to 4, **characterised in that** said central spindle (3) is secured to the moving cam element (1) and its end is provided with a threading for the fastening to the column body (5).

6. Device according to one of claims 1 to 5, **characterised in that** the end windings of said spring (4) are connected to the connecting tabs (41, 42) via support branches (410, 420) extending substantially perpendicular to the central spindle (3).

7. Device according to claim 6, **characterised in that** the support branch (410) connected to said moving cam element (1) has a concave bend (411).

8. Device according to one of claims 1 to 7, **characterised in that** said connecting tabs (41, 42) are engaged in holes (10, 20) forming bearings, arranged through the cam elements (1, 2).

9. Device according to one of claims 1 to 5, **characterised in that** said spring (4) is mounted around a cylindrical rod (7) forming a frame.
